# EUROPEAN PATENT APPLICATION

(11) **EP 3 901 519 A1**
(43) Date of publication of application: **27.10.2021**
(21) Application number: 20175526.1
(22) Date of filing: 19.05.2020
(51) Int. Cl.: F23G 5/00, F23G 5/027, F23G 5/30, C10B 47/24, C10B 53/07, C10G 1/10

(54) **FLUIDIZED BED DEVICE AND METHOD OF OPERATION**

(30) Priority: 20.04.2020 PT 2020116275
(71) Applicant: Piroenerg - Energias Alternativas, Lda, P.-1200-172 Lisboa (PT)
(72) Inventor: Gulyurtlu, Ibrahim Kadri, P-2750-228 Cascais (PT)
(74) Representative: Lourenço Martinho do Rosário, Ana Margarida

(57) **Abstract**

The present invention refers to a pyrolytic reactor intended for processing waste. This device has a particular interest for application in the recycling of plastic waste, from which the production of a liquid fuel is possible. The reactor (1) consists of a combustion chamber (2), burners (4) that burn gas to heat the pipes of the heat exchanger of the reactor (3) that pass through the reactor (1) at its full height and which are immersed in the fluidized bed (20) and on the freeboard (21). The reactor (1) also consists of a distribution plate (19) composed of a set of microperforated pipes for introducing gas into the fluidized bed (20), and of valves of the bed (16) for controlling the removal of the material of the fluidized bed (20).

## Description

### Scope of the invention

The present invention generally refers to a device for processing waste through thermochemical degradation in the absence of oxygen and condensation by cooling, more specifically to a pyrolytic reactor intended for processing waste. This device has a particular interest for application in the recycling of plastic waste, from which the production of a liquid fuel is possible.

### Framework of the invention

Since the beginning of the 21^{st} century, the problems of pollution and recycling have been increasingly on the world agenda. One of the areas that has contributed most to this problem is undoubtedly the area of oil and its derivatives, in particular plastics.

Another source of problems for which solutions have been sought, is the ways of elimination and the potential use of the most diverse types of domestic and industrial waste, through different methods of recycling.

These problems are closely linked to the environmental problem. One of the primary objectives to be achieved is the significant reduction in the emission of polluting gases. There are several solutions and one of them is the use of biofuels.

Pyrolysis is one of the known methods, which not only helps to minimize the problems mentioned-above, but is a self-sustaining process from an energy point of view, as it is a process that produces more energy than it consumes.

Pyrolysis is a chemical reaction of analysis or decomposition, in which the heat supplied, in an environment without oxygen, breaks down the material, giving rise to two or more products. This reaction occurs within an equipment called pyrolytic reactor.

Of various types of pyrolytic reactors, it can be highlighted those of fluidized beds and of flow in suspension.

Fluidized bed pyrolytic reactors are reactors that involve a fluidized bed reactor for pyrolysis and a heat source, preferably external, that provides the heat needed for pyrolysis reactions to take place.

Depending on the type of material that is pyrolyzed, several products can be obtained. From the pyrolysis of plastics, the production of a liquid fuel and a combustible gas are obtained. From the pyrolysis of urban waste, several byproducts could also form, such as tar, oil and ammonia sulphate.

### Background of the invention

Of Pyrolytic reactors, fluidized bed reactors are well known.

Examples of the combustion of organic waste in or above a fluidized sand bed are known, for example, from documents US3863577 or PT108075.

The document PT108075 describes a mechanism for the production of hydrocarbons by pyrolysis of plastic waste and its production method, in which the pyrolysis reactor is surrounded by a fluidized bed external reactor that provides the necessary heat to the pyrolysis process that occurs within the pyrolysis reactor. In the present invention, the pyrolysis reactor is surrounded by a combustion chamber where a part of the gas produced in the pyrolysis process is burned. Additionally, the combustion chamber communicates with a set of pipes of a heat exchanger that pass through the reactor and are immersed in the fluidized bed and in the freeboard, allowing for a more uniform heat distribution throughout the reactor.

It should also be referred to the document PT101825 which presents a pyrolytic reactor that is crossed by a tubular heat exchanger.

### Advantages of Invention

In addition to the above advantages, the reactor of the invention has a number of advantages, namely:
- the combustion chamber is divided into two parts: one that serves only the fluidized part of the pyrolysis reactor and the other that serves the freeboard,
- the combustion gases flowing through the pipes of the heat exchanger immersed in the fluidized bed have a higher temperature than the combustion gases flowing into the pipes in the freeboard. With this characteristic the reactions are slowed down, which prevents further break down of links of chemical compounds, thus maximizing the production of the liquid product,
- the pipes of the heat exchanger are placed along the entire interior of the pyrolysis reactor, unlike in the reactor described in patent PT101825 in which the pipes of the heat exchanger are only in one part of the reactor, which may result in a non-uniform distribution of the temperature inside,
- due to the characteristics of the heat transfer of the pipes of the heat exchanger that are immersed in the fluidized bed, due to the constant mixing of the sand, a much more efficient heat transfer from the pipes of the heat exchanger to the fluidized bed is guaranteed, in which the particles to be pyrolyzed are heated much more quickly, thereby increasing the reaction rate and subjecting the particles to a more uniform temperature,
- the pipes of the heat exchanger that are placed in the freeboard have the objective of ensuring a uniform temperature for the pyrolysis reactions of the gas phase.

Compared to the mechanism described in patent PT108075, the arrangement of the reactor heat exchanger provides a much higher heating rate for fluidized bed particles and more moderate heating in the freeboard. With this provision, a higher rate of formation of the gases formed is prevented, which allows to increase the yield of the production of the liquid product.

Another advantage that the present invention presents in relation to the mechanism proposed in document PT108075 is that the device of the present invention can be upscaled to the size desired. The sizing of the mechanism proposed in patent PT108705 is limited by the efficiency of heat transfer from the external reactor to the pyrolysis reactor. This heat transfer decreases with an increase in the dimensions of the device, leading to a non-uniform temperature distribution and, consequently, resulting in a lower conversion rate and a loss of quality of liquid products.

By conducting experimental studies, it was possible to determine that, compared to the reactor presented in document PT101825, in which the heat transfer coefficient of the heat exchanger is about 30-45 W/m²°C,in the reactor of the present invention, the heat transfer coefficient of the heat exchanger within the fluidized bed reaches 250-300 W/m²°C.

That is, the system of the present invention is energetically more efficient and more effective in obtaining pyrolysis reactions. This means that the heat transfer rate is faster in the present invention, which affects the heating rate of the plastic particles. It also means less heat needed to achieve the same degree of heating, o which consequently improves the energy efficiency of the system.

Since in the freeboard the heat transfer coefficient of the heat exchanger is about 30-45 W/m²°C, that is, it presents a value much lower than the heat transfer coefficient of the heat exchanger within the fluidized bed, which allows the reactions of the gas phase to be decelerated, thus causing an increase in the production of the liquid product.

### Brief description of drawings

These and other characteristics can be easily understood through the attached drawings, which should be regarded as mere examples and not restrictive in any way of the scope of the invention. In figures, and for illustrative purposes, the dimensions of some of the elements may be exaggerated and not scaled. The absolute dimensions and relative dimensions do not correspond to the real relationships for the realization of the invention.

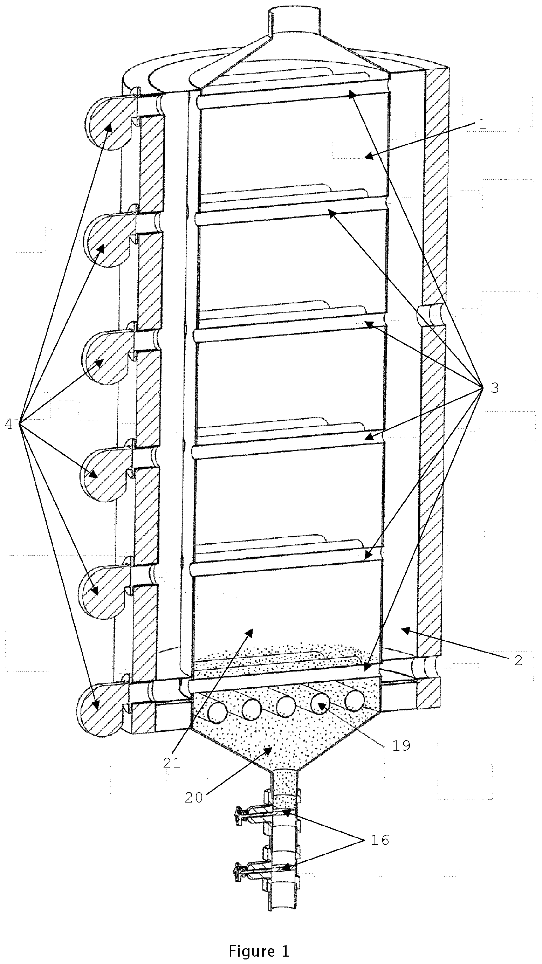

Figure 1 presents a cross cut of the reactor of the device of the present invention.

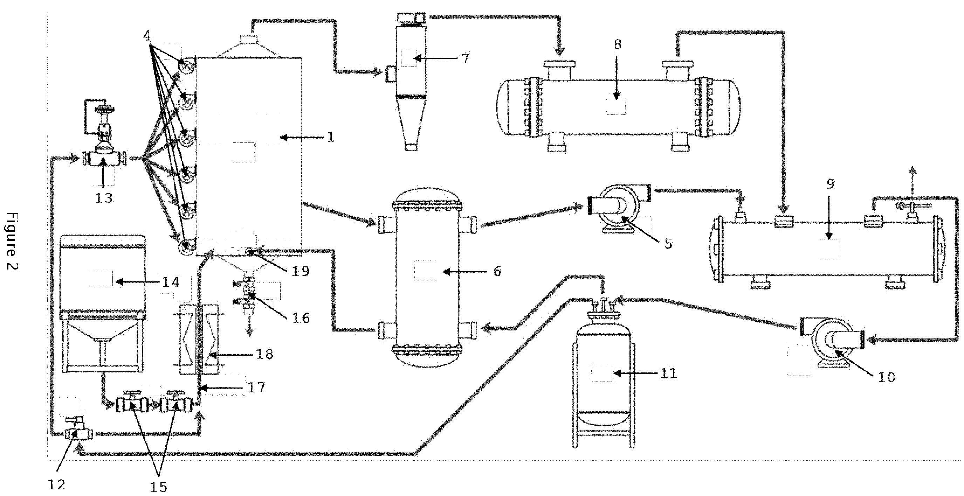

Figure 2 presents a schematic representation of the device of the present invention.

The figures show the elements and components of the device of the present invention, as well as the elements necessary for the operation of the invention:
- 1.: reactor
- 2.: combustion chamber
- 3.: heat exchanger of the reactor
- 4.: burners
- 5.: exhaust fan
- 6.: heat exchanger of the gas
- 7.: cyclone
- 8.: heat exchanger of the cyclone
- 9.: condenser
- 10.: recirculation fan
- 11.: gas tank
- 12.: gas valve of the conveyor
- 13.: gas valve of the burners
- 14.: silo
- 15.: valves of the silo
- 16.: valves of the bed
- 17.: conveyor
- 18.: heat exchanger of the conveyor
- 19.: distribution plate
- 20.: fluidized bed
- 21.: freeboard

### Detailed description of the invention

"Material" or "particles" means "particles of material to be pyrolyzed".

Referring to the figures, the present invention refers to a device intended for waste processing through thermochemical degradation in the absence of oxygen and condensation by cooling, more specifically to a new pyrolytic reactor and its method of operation for waste processing.

The device of the present invention consists of:
- a reactor (1) of fluidized bed type, which incorporates:
   - a combustion chamber (2) that involves the reactor (1) and which integrates:
      - burners (4) that burn the gas that heats the pipes of the heat exchanger of the reactor (3),
      - pipes of the heat exchanger of the reactor (3) that pass through the reactor (1) at its full height and which are immersed in the fluidized bed (20) and on the freeboard (21),
   - a heat exchanger of the gas (6) to heat the part of the gas used for fluidizing the material of the fluidized bed (20),
   - an exhaust fan (5) to facilitate the extraction of combustion products produced by the burning of part of the non-condensable gases,
   - a cyclone (7) for removing particles from the gases produced during pyrolysis,
   - a heat exchanger of the cyclone (8) for rapid cooling of the gases coming out of the cyclone (7),
   - a condenser (9) for cooling the liquid product formed,
   - a recirculation fan (10) to increase the pressure of the part of the non-condensable gas,
   - a gas tank (11) to store the gas produced and from where it is distributed for different possible uses,
   - a gas valve of the conveyor (12) for controlling the flow of gas that leaves the gas tank (11) and is forwarded to feed the conveyor (17),
   - a gas valve of the burners (13) for controlling the flow of gas that leaves the gas tank (11) and is transported to the combustion chamber (2) and to the burners (4),
   - a silo (14) where the material to be pyrolyzed is kept,
   - valves of the silo (15) for controlling the flow of material leaving the silo (14),
   - valves of the bed (16) for controlling the removal of the material of the fluidized bed (20),
   - a conveyor (17) for transporting material from the silo (14) to the reactor (1),
   - a heat exchanger of the conveyor (18) fed with water to prevent the material to be pyrolyzed from starting to melt on the conveyor (17),
   - a distribution plate (19) composed of a set of microperforated pipes for introducing gas into the fluidized bed (20),
   - control system with instrumentation for the operation of the reactor (1) and the rest of the device.

The reactor (1) has the shape that best suits the pyrolysis process that will occur, and this shape maybe, namely but not exclusively, circular or rectangular. The dimensions of the reactor (1) depend on the needs of the pyrolysis process. The walls of the reactor (1) are made of an appropriate material, resistant to high temperatures, namely but not exclusively, in 310 stainless steel with a thickness ranging from 0,005 m to 0,015 m, more specifically 0,01 m. The bottom of the reactor (1), below the distribution plate (19), has an inverted conical shape, to which is coupled, at the apex, a tube for removal of the material of the fluidized bed (20). The output of the material is controlled through the valves of the bed (16).

The heat required for the pyrolysis reaction is supplied through the pipes of the heat exchanger of the reactor (3) located inside the reactor (1), either immersed in the fluidized bed (20) or in the freeboard (21) . The pipes of the heat exchanger of the reactor (3) have a shape, namely but not exclusively, tubular and their quantity depends on the dimensions of the reactor (1). The pipes of the heat exchanger of the reactor (3) have an external diameter ranging between 0,01 m and 0,03 m, more specifically 0,02 m, and the pipes of the heat exchanger of the reactor (3) are placed at a distance between them ranging from 0,1 m to 0,2 m, more specifically 0,15 m.

The combustion chamber (2) is made of a suitable material, namely but not exclusively, in carbon steel with a thickness ranging from 0,005 m to 0,015 m, more specifically 0,01 m, supported by a refractory coating with thickness ranging from 0,01 m to 0,02 m, more specifically 0,015 m and with external insulation with a thickness ranging from 0,1 m to 0,2 m, more specifically 0,15 m.

The device incorporates a centralized control system to monitor operation. Several sensors are located in different locations of the installation for data acquisition in order to ensure control of the operation. There are several temperature and pressure sensors located inside the reactor (1), as well as temperature and pressure sensors in the combustion chamber (2). The heat exchanger of the reactor (3), the heat exchanger of the gas (6), the heat exchanger of the cyclone (8) and the heat exchanger of the conveyor (18) are equipped with temperature sensors at the inlet and outlet of fluids. The gas tank (11) is also equipped with temperature and pressure sensors.

### Method of operation

The process is initiated by increasing the temperature of the reactor (1) up to a temperature between 450°C and 550°C, and by fluidizing the material that makes up the fluidized bed (20), through the passage of hot combustion gases through the pipes of the heat exchanger of the reactor (3) immersed in the fluidized bed (20) and in the freeboard (21). In the start-up phase, the combustion chamber (2) and the burners (4) are powered by an auxiliary fuel, namely but not exclusively natural gas. As soon as sufficient non-condensable gas is obtained, the supply of the auxiliary fuel is interrupted, and the non-condensable gas produced is used as fuel.

The reactor (1) is fed by the material to be pyrolyzed and which is inside the silo (14) and which is kept inert bypassing nitrogen, which also pressurizes the silo (14). The material flows from the silo (14) to the conveyor (17) through the valves of the silo (15). In the conveyor (17) the material to be pyrolyzed is mixed with a part of the non-condensable gas produced which is stored inside the gas tank (11) from which it flows into the conveyor (17) through the gas valve of the conveyor (12) . Near the walls of the reactor (1), the conveyor (17) is cooled through the heat exchanger of the conveyor (18), which prevents the material to be pyrolyzed from softening before entering the reactor (1) . The material is fed to the reactor (1) at a distance between 0,2 m and 0,3 m, more specifically 0,25 m above the top of the fluidized bed (20) and the speed of the transport gas is adjusted to give a uniform distribution of the material on the fluidized bed (20).

Whenever it is found that it is necessary, the material of the fluidized bed (20) can be discharged from the reactor (1), through the lower part, through the valves of the bed (16) .

The material to be pyrolyzed after entering the reactor (1), or coming into contact with the surface of the pipes of the heat exchanger of the reactor (3) in the freeboard (21) or falls into the fluidized bed (20), which leads to, a rapid breakdown of the molecular structure of the material, thus leading to the production of a gas. The residence time of this gas inside the reactor (1) is relatively low, which prevents further cracking of the molecular structure, thus maximizing the amount of liquid to be obtained.

The part of the non-condensable gas that is burned in the combustion chamber (2) and flows into the pipes of the heat exchanger of the reactor (3), after leaving the pipes of the heat exchanger of the reactor (3) flows through the heat exchanger of the gas (6) where a part of the part of the non-condensable gas is heated and then forwarded to the distribution plate (19) which injects the referred gas into the fluidized bed (20) in order to heat and fluidize the material in the fluidized bed (20). The part of the part of the non-condensable gas that is not forwarded to the distribution plate (19) is forwarded to the exhaust fan (5) from where it is released into the atmosphere. This gas before being released into the atmosphere can still be used to dry the material to be pyrolyzed.

The gas that results from the pyrolysis reaction, leaves the reactor (1) at the top and is sent to the cyclone (7) where any particulate material is removed. Then, the gas is conveyed to the heat exchanger of the cyclone (8) so that the gas cools quickly below 200°C in order to freeze any reactions that may still occur. The gas then passes through a condenser (9) where the liquid produced previously is used to cool the gas to a temperature of around 15°C, which causes the gas to condense leading to the production of liquid. The condensed part is deposited on the bottom of the condenser (9) and then periodically removed from the condenser (9) and routed to a storage tank to storage. The non-condensable part is then recirculated using the recirculation fan (10) which increases the pressure to a value of about 5 bar. From the recirculation fan (10) the gas is directed to the gas tank (11) from where the gas is distributed for the different end-use applications.

For end-use applications, this gas can be used, namely but not exclusively:
- to be directed to the distribution plate (19) which injects the referred gas into the fluidized bed (20) in order to heat and fluidize the material of the fluidized bed (20);
- - to be used in the feeding of the conveyor (17);
- to be used to feed the combustion chamber (2) and the burners (4);
- for external use, namely in the production of electricity, to be burned in other types of equipment, etc.

In the case where the gas is used to feed the combustion chamber (2) and the burners (4), the gas is directed to the combustion chamber (2) and to the burners (4), with its inlet flow controlled by the gas valve of the burners (13).

The silo (14) is equipped with load cells that provide instant information on the amount of material to be pyrolyzed inside the silo (14).

## Claims

1. Fluidized bed device comprising a fluidized bed reactor (1), a combustion chamber (2), a heat exchanger of the reactor (3), burners (4), a gas tank (11), a silo (14), a conveyor (17) and a distribution plate (19), **wherein** the combustion chamber (2) surrounds the reactor (1) and the pipes of the heat exchanger of the reactor (3) that pass through the reactor (1) being immersed in a fluidized bed (20) and on a freeboard (21).

2. Fluidized bed device according to claim 1, **wherein** the device additionally comprises an exhaust fan (5), a heat exchanger of the gas (6), a cyclone (7), a heat exchanger of the cyclone (8), a condenser (9), a recirculation fan (10), a gas valve of the conveyor (12), valves of the bed (16) and a heat exchanger of the conveyor (18).

3. Fluidized bed device according to any of the preceding claims, **wherein** the gas that is burned in the combustion chamber (2) is part of the non-condensable gas resulting from the pyrolysis process.

4. Fluidized bed device according to any of the preceding claims, **wherein** the heat required for the pyrolysis reaction being supplied through the pipes of the heat exchanger of the reactor (3) immersed in the fluidized bed (20) and in the freeboard (21).

5. Fluidized bed device according to any of the preceding claims, **wherein** the gas that is burned in the combustion chamber (2) flows into the pipes of the heat exchanger of the reactor (3) that pass through the reactor (1).

6. Fluidized bed device according to any of the preceding claims, **wherein** the combustion chamber (2) is made of in carbon steel with a thickness ranging from 0,005 m and 0,015 m, supported by a refractory coating with thickness ranging from 0,01 m to 0,02 m and with an external insulation with a thickness ranging from 0,1 m and 0,2 m.

7. Fluidized bed device according to any of the preceding claims, **wherein** the pipes of the heat exchanger of the reactor (3) have an external diameter ranging between 0,01 m and 0,03 m and being placed at a distance from each other ranging from 0,1 m and 0,2 m.

8. Fluidized bed device according to any of the preceding claims, **wherein** the walls of the reactor (1) are made of stainless steel 310 with a thickness of 0,01 m.

9. Method of operation of the fluidized bed device claimed in the preceding claims, **wherein** the gas that flows to the pipes of the heat exchanger of the reactor (3), after leaving the pipes of the heat exchanger of the reactor (3) is directed to the heat exchanger of the gas (6) where part of the part of the non-condensable gas is heated being then forwarded to the distribution plate (19) which injects the referred gas into the fluidized bed (20) .

10. Method according to claim 9, **wherein** the part of the part of the non-condensable gas that is not forwarded to the distribution plate (19) being forwarded to the exhaust fan (5) from where it is released into the atmosphere.

11. Method according to any of the claims 9 or 10, **wherein** the reactor (1) is fed with the material to be pyrolyzed and which is located inside the silo (14) through the conveyor (17) where the material to be pyrolyzed is mixed with a part of the non-condensable gas produced and which is stored inside the gas tank (11), and which flows to the conveyor (17) through the gas valve of the conveyor (12), where near to the walls of the reactor (1) the conveyor (17) is cooled through the heat exchanger of the conveyor (18).

12. Method according to any of the claims 9 to 11, **wherein** the material of the fluidized bed (20) being removed from the reactor (1), through its lower part, through the valves of the bed (16).

13. Method according to any of the claims 9 to 12, **wherein** the gas resulting from the pyrolysis reaction, exits from the top of the reactor (1) being directed to the cyclone (7), from where it is conducted to the heat exchanger of the cyclone (8), passing through to the condenser (9) with the condensed part deposited on the bottom from where it is removed and sent to a storage tank, the non-condensable part being recirculated through the recirculation fan (10) from where the gas is directed to the gas tank (11).
